# EUROPEAN PATENT APPLICATION

(11) **EP 4 275 560 A2**
(43) Date of publication of application: **15.11.2023**
(21) Application number: 23165838.6
(22) Date of filing: 31.03.2023
(51) Int. Cl.: A47J 36/10, A47J 43/07

(54) **A FOOD PROCESSING APPARATUS CONTAINER AND A FOOD PROCESSING APPARATUS**

(30) Priority: 22.04.2022 CN 202220946283 U; 07.03.2023 CN 202320410154 U
(71) Applicant: Alpha Home Group Limited, Hong Kong 999077 (CN)
(72) Inventor: Chow, Jesse, Hong Kong, 999077 (CN)
(74) Representative: Wang, Bo

(57) **Abstract**

The present utility model relates to the technical field of food processing apparatuses, particularly to a food processing apparatus container and a food processing apparatus. A food processing apparatus container of the present utility model comprises a cover assembly and a cup body, wherein the cover assembly comprises a plurality of holding members and a cover body arranged with a stirring shaft opening; the holding members are connected with the cover body and can hold the processing knife; the top of the cover body is fixedly arranged with an annular extension body coaxial with the stirring shaft opening, and the inner wall of the extension body is fixedly arranged with an L-shaped host connection body; the bottom of the cover body is fixedly arranged with a cup connecting body, and the cup body is arranged with a connected body; the cup connecting body and the connected body butt each other to limit their mutual distance along the shaft axis of the stirring shaft opening and make the cover body and the cup body connected detachably. The present utility model can conveniently connect the cup body of any different function with the host through the cover body.

## Description

### TECHNICAL FIELD

The present utility model relates to the technical field of food processing apparatuses, particularly to a food processing apparatus and its container.

### BACKGROUND ART

Patent JP3234657U disclosed an ice shaving apparatus (68).

Patent CN2022203185974 disclosed a food processing apparatus container. As shown from FIG. 12 to FIG. 17, the food processing apparatus container in a prior art comprises a container assembly (1), wherein the container assembly (1) comprises a cover assembly (2) and a cup body (6) connected with the cover assembly (2). The cover assembly (2) and the cup body (6) form a holding cavity (not shown in the accompanying drawings) that can be used to hold food and other substances. As a prior art, the top opening of the cup body (6) is covered by the cover assembly (2) so that the cover assembly (2) and the cup body (6) form a holding cavity (not shown in the accompanying drawings) that can be used to hold food and other substances. Certainly, the cup body (6) can also be a sheet and covers the bottom opening of the cover assembly (2) so that the cover assembly (2) and the cup body (2) form a holding cavity (not shown in the accompanying drawings) that can be used to hold food and other substances.

As a prior art, inside the holding cavity is arranged with an internal container (7) detachably connected with the cup body (6) wherein the top of the internal container (7) butts the cover assembly (2). The food such as ice cream is placed inside the internal container (7) for processing.

The cover assembly (2) comprises a cover body (21), a plurality of holding members (22) and an operating member (24).

The cover body (21) is arranged with a stirring shaft opening (218) that passes through the cover body (21).

The holding members (22) are connected with the cover body (21) in a linearly sliding manner and have a tendency to approach the stirring shaft opening (218) on the horizontal plane.

For example, the cover body (21) is arranged with a plurality of guide rails (219), wherein the holding members (22) are arranged with a plurality of guide grooves (229) and the guide rails (219) are embedded into the guide grooves (229) to realize the linearly sliding connection of the holding members (22) with the cover body (21).

A holding member (22) comprises a holding part (221) which can be inserted into the stirring shaft opening (218).

As a prior art, the cover assembly (2) also comprises a plurality of resilient pieces (23), and there is a plurality of holding pieces (22) which are arranged around the stirring shaft opening (218), and the resilient members (23) are respectively connected with different holding members (22) so that the holding members have a tendency to approach each other and thus have a tendency to approach the stirring shaft opening (218) and thus can ensure that the holding forces of the holding members (22) on the holding groove (82) of the after-mentioned processing knife (8) are equal; the holding members are evenly arranged around the stirring shaft opening (218) so that the holding parts can stably clamp the processing knife (8). The resilient members (23) are springs, the holding members (22) are arranged with connecting lugs (239), and the resilient members (23) are connected with the connecting lugs (239).

The operating member (24) is movably connected with the cover body (21), and the movability of the operating member (24) relative to the cover body (21) has a vector along the stirring shaft opening (218). For example, the operating member (24) is connected with the cover body (21) in a linearly sliding manner along the stirring shaft opening (218).

At least one kind of the holding members (22) and the operating member (24) is arranged with a supporting slope (241) so that the operating member (24) can butt the butting bevel of the holding members (22), or the abutting bevel (241) of the operating member (24) can butt the holding members (22), or the abutting bevel (241) of the operating member (24) can butt the abutting bevels (241) of the holding members (22) to keep the holding members (22) away from the stirring shaft opening (218).

The operating member (24) can butt the holding members (22) to keep the holding members (22) away from the stirring shaft opening (218).

For example, the container assembly (1) is mounted onto the lifting platform (92) of the host (9) (not shown in the accompanying drawings). The lifting platform of the host can lift and thus drive the cup body and the cover assembly to go up and down. The structure of realizing the lifting of the lifting platform is a conventional structure in the prior arts, and for example, it realizes the lifting of the lifting platform (90) via an electric cylinder.

The processing knife (8) is arranged with an annular holding groove (82), and at least one holding part (221) is inserted into the holding groove (82) so that the processing knife (8) can be held onto the cover assembly (2).

It should be noted that the host (9) has a stirring shaft (91) with a rotating force, and the stirring shaft (91) can also go up and down. The stirring shaft (91) can pass through the stirring shaft opening (218) and be connected with the connecting part (81) of the processing knife (8).

When or after the stirring shaft (91) is connected with the connecting part (81) of the processing knife (8), the operator makes the operating member (24) move; for example, the operator presses the operating member (24) by hand to make the holding members (22) far away from the stirring shaft opening (218) till the holding part (221) pulls out the holding groove (82), and the processing knife (8) is released. At the moment, the processing knife (8) can rotate and go up and down as the stirring shaft (91) moves for food processing.

It can be seen from the above that the present utility model can realize the release of the processing knife (8) by pressing the operating member (24), which is safe and convenient to move the operating member (24).

As a prior art, the operating member (24) comprises an operating part (242), and in natural state, the operating part (242) is provided with the highest point of the cover assembly (2). The lifting platform drives the cover assembly of container assembly to go up till the operating part butts the host; it is convenient to realize the release of the processing knife without manual operation of the operating member.

As a prior art, the operating member (24) comprises a connecting shaft (246) hinged with the cover body (21), and the part of the operating member (24) that butts the holding members (22) is located between the connecting shaft (246) and the operating part (242). When the operating part (242) is butted by the host (9), the operating member (24) can provide a great force to hold the holding members (22) to ensure smooth movement of the holding members (22) and high reliability.

As a prior art, the holding part (221) is arranged with a knife bevel (222). When the processing knife (8) is mounted onto the cover assembly (2), it is not necessary to push the holding members (22) aside; it is only necessary to make the processing knife (8) butt the knife bevel (222) to move the holding members (22) till the holding part (221) is inserted into the holding groove (82); it is convenient to mount the processing knife (8) onto the cover assembly (2).

As a prior art, there are two holding members (22) which are symmetrical with respect to the operating member (24).

As a prior art, the cover body (21) is arranged with a protrusion (217), and the stirring shaft opening (218) passes through the protrusion (217), the holding members (22) butt the protrusion (217), the side wall of the protrusion (217) is arranged with a yielding opening (211), and the holding part can pass through the yielding opening (211). It can limit the distance among the holding members (22) and is convenient for mounting the processing knife (8) onto the cover assembly (2).

As a prior art, it also comprises a hood (29) that covers the holding members (22).

To sum up, the prior art has the following technical problems at least,

First, the cup body (6) must be connected with the host (9) through the lifting platform, and as a result, the bottom end surface of the cup body (6) must be a flat surface and cannot be set with functional members such as an ice shaving device, causing a single function of the cup body (6).

### SUMMARY OF UTILITY MODEL

One purpose of the present utility model is to solve or alleviate the first technical problem described above.

As a solution of the present utility model, a food processing apparatus container comprises a cover assembly and a cup body, wherein the cover assembly comprises a plurality of holding members and a cover body arranged with a stirring shaft opening; the holding members are connected with the cover body and can hold the processing knife; the top of the cover body is fixedly arranged with an annular extension body coaxial with the stirring shaft opening, and the inner wall of the extension body is fixedly arranged with an L-shaped host connection body; the bottom of the cover body is fixedly arranged with a cup connecting body, and the cup body is arranged with a connected body; the cup connecting body and the connected body butt each other to limit their mutual distance along the shaft axis of the stirring shaft opening and make the cover body and the cup body connected detachably.

The effect achieved by the present utility model is that a cup body with any different function can be conveniently connected with the host through the cover body.

As a further technical solution, it also comprises an insurance triggering member arranged with a triggering top, wherein the insurance triggering member is arranged onto the cover body and the triggering top can protrude from the top of the cover body.

It is safe to ensure that the stirring shaft can rotate only when the container assembly is mounted onto the host.

As a further technical solution, the cover body is arranged with a linear chute, and the insurance triggering member is inserted into the linear chute so that the insurance triggering member is connected with the cover body in a linearly sliding manner and the triggering top can go up and down relatively to the cover body.

It can ensure that the insurance triggering member is connected with the cover body in a linearly sliding manner.

As a further technical solution, the insurance triggering member is provided with an anti-falling resilient arm that extends outwards, and the anti-falling resilient arm butts the inner side of the linear chute.

The lifting of the insurance triggering member has a damping effect and thus makes it difficult for the insurance triggering member to fall off from the cover body.

As a further technical solution, the cover body and the cup body are connected rotatablely and detachably, the cover body is arranged with a safety lifting body, wherein the safety lifting body comprises a higher section and a lower section, and the bottom of the insurance triggering member butts the higher section when the cover body and the cup body are closed.

It is convenient that the triggering top does not interfere with the use.

As a further technical solution, the extension body is arranged with a locking groove and an unlocking and yielding groove.

As a further technical solution, the cup body is arranged with an ice shaving device and/or an external cup cover.

A food processing apparatus comprises a container described above, and it also comprises a processing knife and is arranged with a stirring shaft which can rotate and lift, wherein the bottom of the stirring shaft is a spiral spline, the processing knife is arranged with a holding groove and a connecting part just facing the stirring shaft opening; the processing knife is also arranged with a plurality of knife wings or a knife disc with top cones; the holding members hold the processing knife; the cover assembly also comprises an operating member for controlling the holding members; the host is arranged with an L-shaped cover connecting protrusion, the cover body rotates relatively to the host so that the host butts the operating member and further controls the holding members to unlock the processing knife when the host connecting body and the cover connecting protrusion butt each other and are connected.

As a further technical solution, the extension body is arranged with a locking groove and an unlocking and yielding groove; the host is arranged with a locking protrusion and an unlocking button that can lock the protrusion to lift, and the locking protrusion is inserted into the locking groove to prevent the cover body from rotating relatively to the host.

The container assembly can be locked and unlocked conveniently.

As a further technical solution, it also comprises an insurance triggering member arranged with a triggering top, wherein the insurance triggering member is arranged onto the cover body, the triggering top can protrude from the top of the cover body, the host is arranged with an arc yielding groove, the host is arranged with an electrical signal device inside, the cover body rotates relatively to the host so that the triggering top triggers the electrical signal device enables the host to operate after the host connecting body and the cover connecting protrusion butt each other and are connected.

It is safe that the host can operate only after the container assembly is mounted in place.

Another object of the present utility model is to provide a safe food processing apparatus.

A safe food processing apparatus comprises a lifting seat, a container and a base provided with a host; the said host is provided with an output shaft with rotating power, and the said container is detachably connected with the said lifting seat; the said lifting seat can rotate and go up and down relative to the said base; the axis of the said lifting seat that can rotate relative to the said base is collinear with the axis of rotation of the said output shaft; it also comprises a safety switch and a triggered member; the host is provided with a host housing; the triggered member is connected linearly and slidably with the host housing, and the said safety switch is located on the linearly sliding path of the triggered member and can control the said output shaft; the triggered member comprises a toggled end exposed from the host housing; the container assembly is provided with a triggering member that comprises a triggering end, and the highest part of the triggering end is the highest part of the container assembly; the toggled end is located on the rotating and ascending path of the triggering end.

The effect achieved by the present utility model is that it is safe because the output shaft can rotate only after the lifting seat drives the container assembly to rotate and ascend.

As a further technical solution, the container assembly comprises a container and a container cover which is connected with the container in a rotationally detachable manner; the triggering member comprises a locking end and is connected vertically, linearly and slidably with the container cover; the container is provided with a locking protrusion and the highest part of the triggering end is the highest part of the container assembly when the locking end butts the top of the locking protrusion.

As a further technical solution, the side of the locking protrusion is provided with two guide bevels.

It can ensure the triggering member to ascend and descend smoothly.

As a further technical solution, the container assembly also comprises a reset member, wherein both ends of the reset member is connected with the container cover and the triggering member respectively so that the triggering end tends to descend.

The triggering end moves downward and retracts into the container cover to prevent the triggering end from being broken and affecting the operations.

As a further technical solution, the triggering member comprises a limit part with the triggering end and the locking end fixed at the top and bottom ends of the limit part respectively; when being viewed from above, the triggering end is completely located inside the locking end.

It can prevent the diameter of the container from being limited and allow a large capacity of the container.

As a further technical solution, the container cover is provided with two protective bodies; the locked end faces the area formed by the two protective bodies.

It can prevent the locking end from being damaged when the container cover is operated.

As a further technical solution, it also comprises a resilient member that is a spring; the host housing is provided with a resilient member fixing column; the triggered member is provided with a resilient member opening, the inner wall of the resilient member opening comprises a bevel opening end surface, one end of the resilient member is fixedly connected with the resilient member fixing column and the other end butts the opening end surface so that the triggered member tends to reset and ascend.

It can lower the production cost of the triggered members and ensure smooth linearly sliding of the triggered members.

As a further technical solution, the host housing is provided with a limit body, the triggered member is provided with a limit opening and the limit body is inserted into the limit opening.

It can limit the travel distance of the triggered member and thus ensure reliability.

As a further technical solution, the triggering end rotates and ascends along the spiral line.

As a further technical solution, the host housing is provided with a sliding groove, the side wall of the triggered member fits the side wall of the sliding groove so that the triggered member can be connected linearly and slidably with the host housing.

To sum up, the present utility model can achieve the following technical effects:
1} The cup body with any different function can be conveniently connected with the host through the cover body.
2} It is safe to ensure that the stirring shaft can rotate only after the container assembly is mounted onto the host.
3} It is safe that the host can operate only after the container assembly is mounted in place.
4} It is safe that the output shaft can rotate only after the lifting seat drives the container assembly to rotate and ascend.
5} The triggering end moves downward and retracts into the container cover to prevent the triggering end from being broken and affecting the operations.
6} It can prevent the diameter of the container from being limited and allow a large capacity of the container.

### BRIEF DESCRIPTION OF DRAWINGS

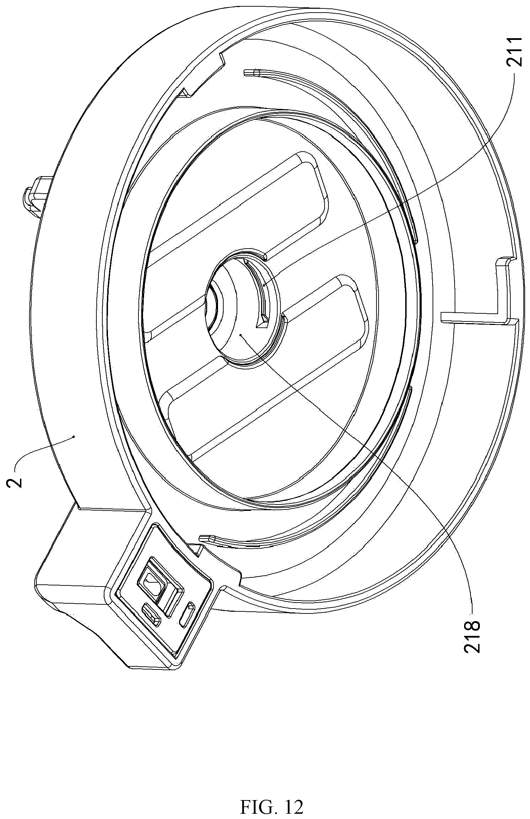

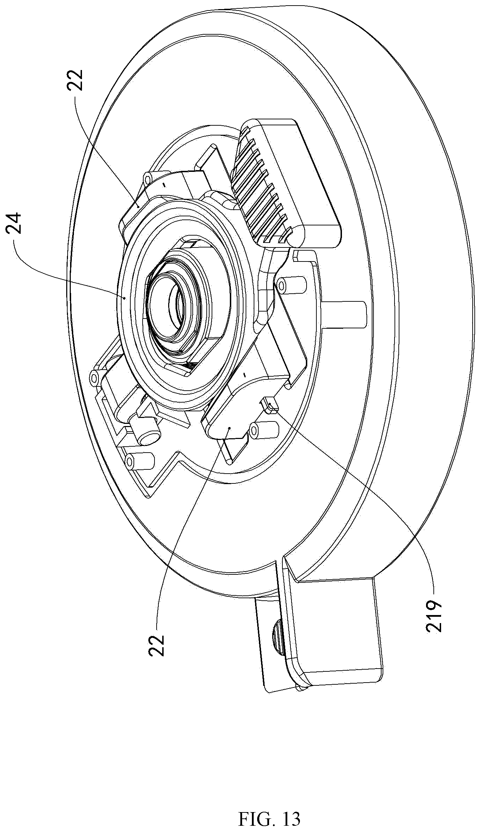

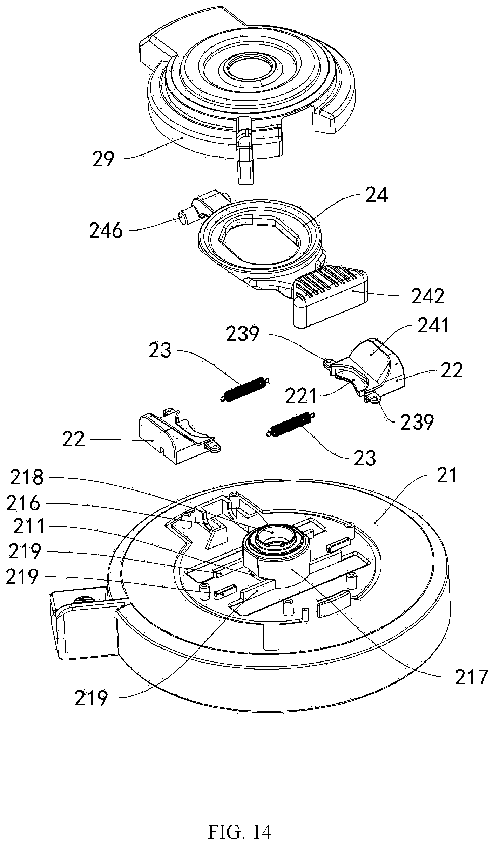

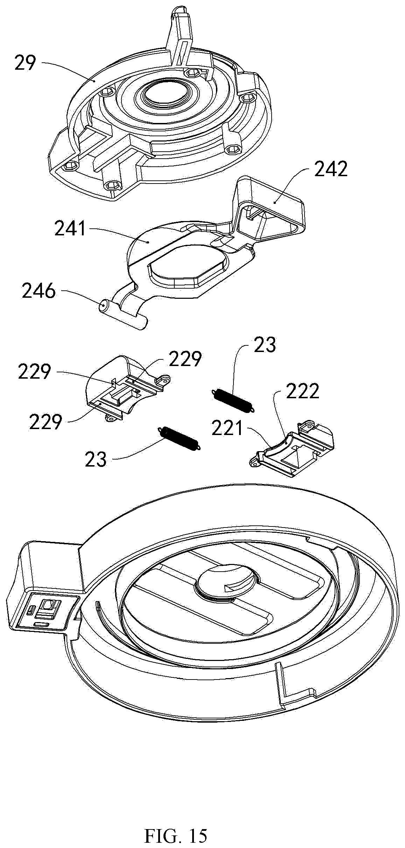

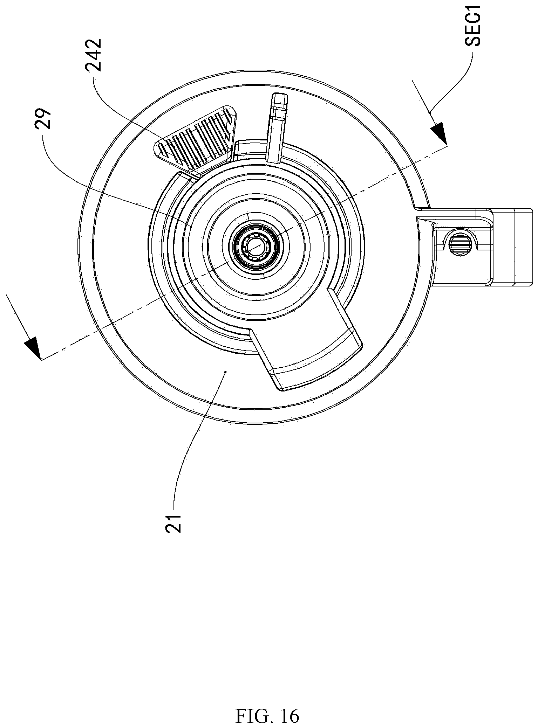

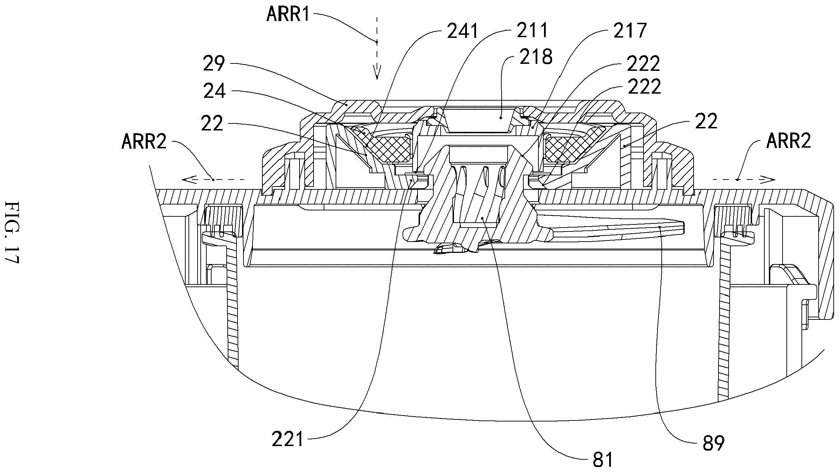

Figures 1 to 11 show the container assembly (1) of one embodiment of the present utility model; Figures 12 to 17 show the container assembly (1) in a prior art.
FIG. 1 is a three-dimensional schematic diagram of the food processing apparatus in one embodiment of the present utility model.
FIG. 2 is a three-dimensional schematic diagram of the food processing apparatus in one embodiment of the present utility model.
FIG. 3 is a three-dimensional schematic diagram of the food processing apparatus in one embodiment of the present utility model, wherein the food receiving plate (7) is not drawn.
FIG. 4 is a three-dimensional schematic diagram of the food processing apparatus in one embodiment of the present utility model, wherein the food receiving plate (7) is not drawn.
FIG. 5 is a schematic diagram of Section 2.
FIG. 6 is a vertically schematic diagram of the container assembly (1) in one embodiment of the present utility model.
FIG. 7 is a top view of the container assembly (1) in one embodiment of the present utility model.
FIG. 8 is a three-dimensional exploded and schematic diagram of the container assembly (1) in one embodiment of the present utility model.
FIG. 9 is a three-dimensional exploded and schematic diagram of the container assembly (1) in one embodiment of the present utility model.
FIG. 10 is a schematic diagram of Section 3.

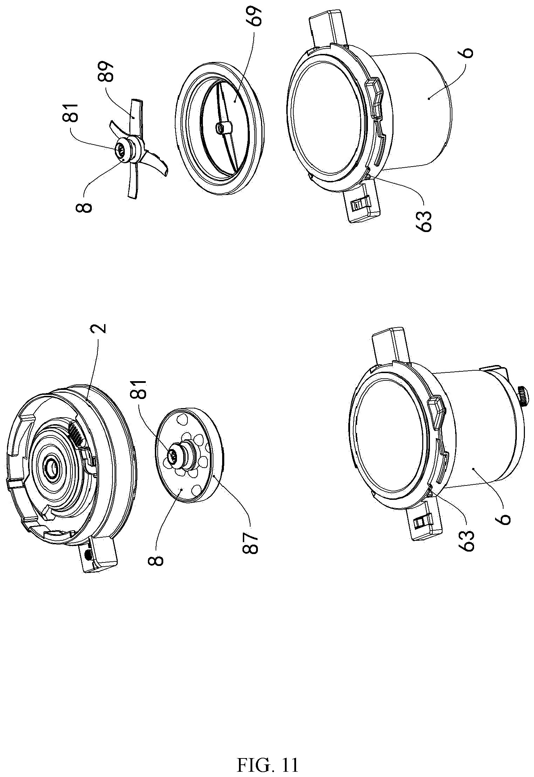

FIG. 11 is a three-dimensional exploded and schematic diagram of the container assembly (1) in one embodiment of the present utility model; the cup body (6) on the left side, the external cup cover (69) and the processing knife (8) are used to cooperate with the ice shaving device (68) to make ice shaving; the cup body (6) on the right side, the external cup cover (69) and the processing knife (8) are used to stir and make ice cream; the connected body (63) and the safety lifting body (64) of the cup body (6) on the left side is the same as those on the left side; therefore, the cover assembly (2) can be shared.
FIG. 12 is a three-dimensional schematic diagram of the cover assembly (2) in a prior art.
FIG. 13 is a three-dimensional schematic diagram of the cover assembly (2) in a prior art, wherein the hood (29) is not drawn.
FIG. 14 is a three-dimensional exploded and schematic diagram of the cover assembly (2) in a prior art.
FIG. 15 is a three-dimensional exploded and schematic diagram of the cover assembly (2) in a prior art.
FIG. 16 is a top view of the cover assembly (2) in a prior art.
FIG. 17 is a partially schematic diagram of Section 1; Arrow 1 indicates that the general direction in which the operating member (24) moves downwards after the operating part (242) is pressed; Arrow 2 indicates that the general direction in which the operating member (24) leaves the connecting part (81) after the operating member (24) is butted.
FIG. 18 is a three-dimensional exploded and schematic diagram of the safe food processing apparatus in one embodiment of the present utility model.
FIG. 19 is a three-dimensional exploded and schematic diagram of the safe food processing apparatus container in one embodiment of the present utility model from another view.
FIG. 20 is a three-dimensional exploded and schematic diagram of the container assembly (59) in one embodiment of the present utility model.
FIG. 21 is a three-dimensional schematic diagram of the container cover (592) in one embodiment of the present utility model.
FIG. 22 is a cutaway schematic diagram of the container assembly (59) in one embodiment of the present utility model.
FIG. 23 is a three-dimensional schematic diagram of the host housing (515) in one embodiment of the present utility model.
FIG. 24 is a three-dimensional schematic diagram of the host housing (515), the triggered member (512), the safety switch (513) and the resilient member (514) in one embodiment of the present utility model.
FIG. 25 is a three-dimensional schematic diagram of the triggered member (512) in one embodiment of the present utility model.
FIG. 26 is a cutaway schematic diagram of the host housing (515), the triggered member (512), the safety switch (513) and the resilient member (514) in one embodiment of the present utility model.

### DETAILED EMBODIMENTS

The specific embodiments of the present utility model will be described below in combination with the accompanying drawings in the specification.

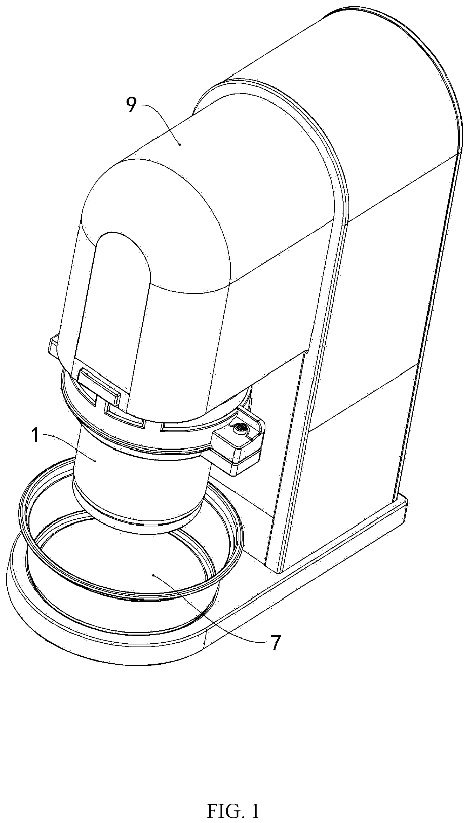

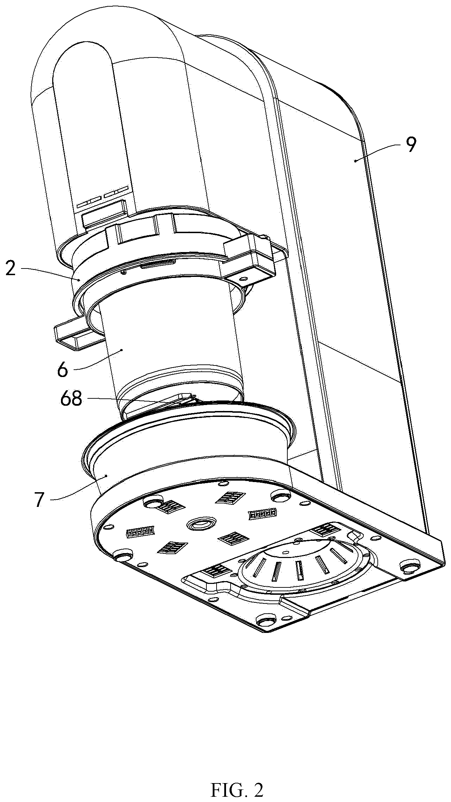

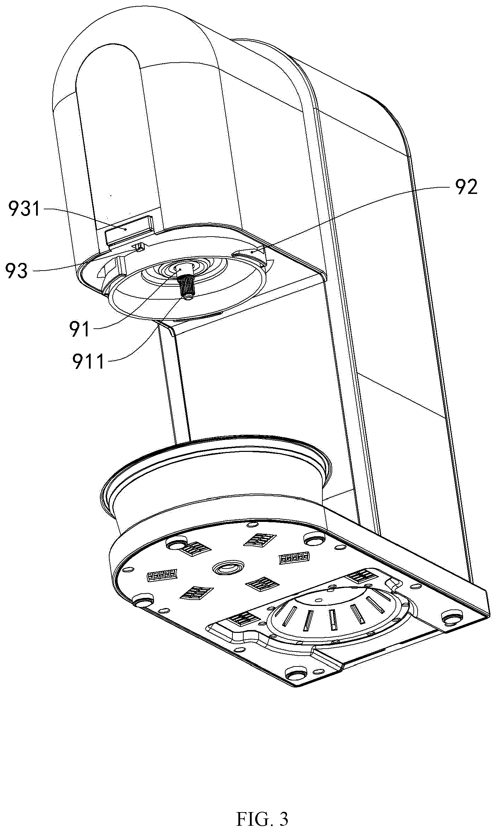

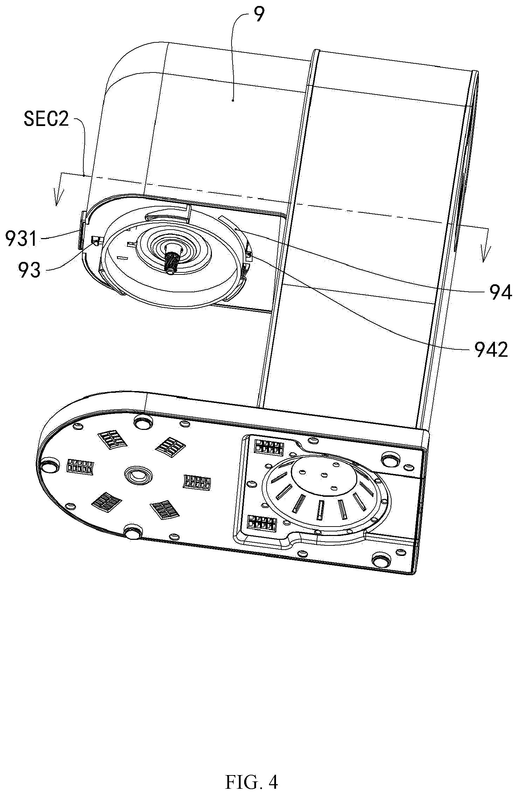

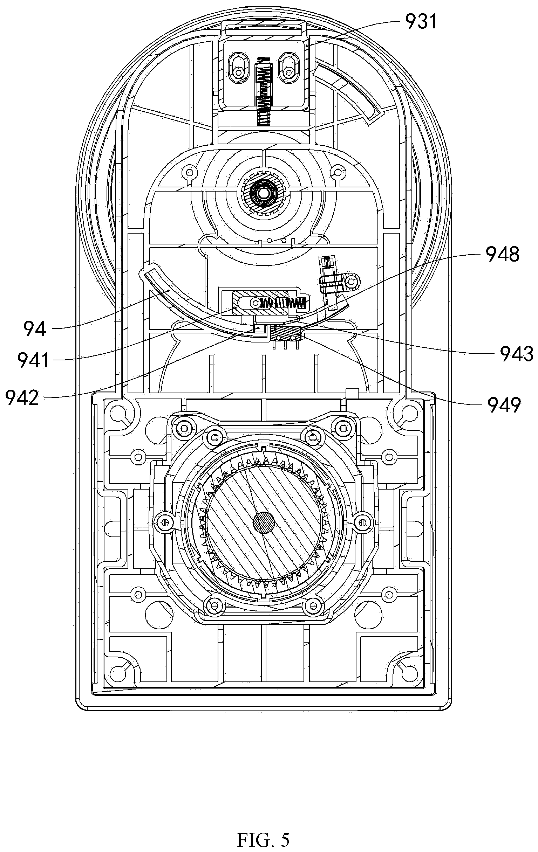

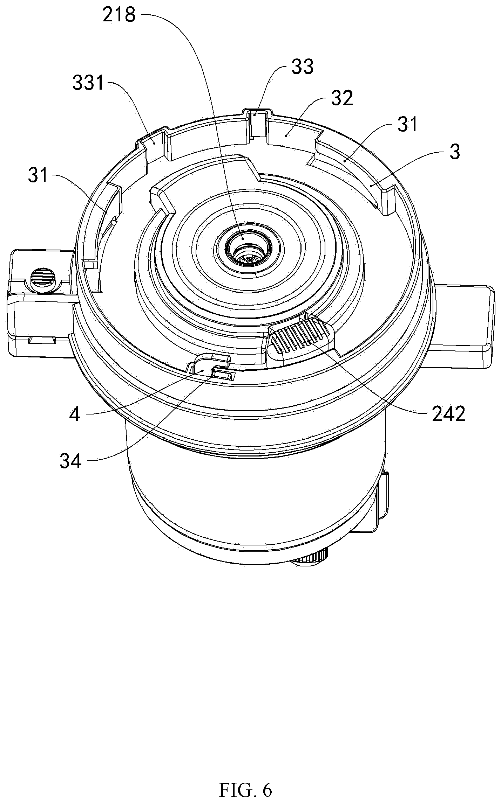

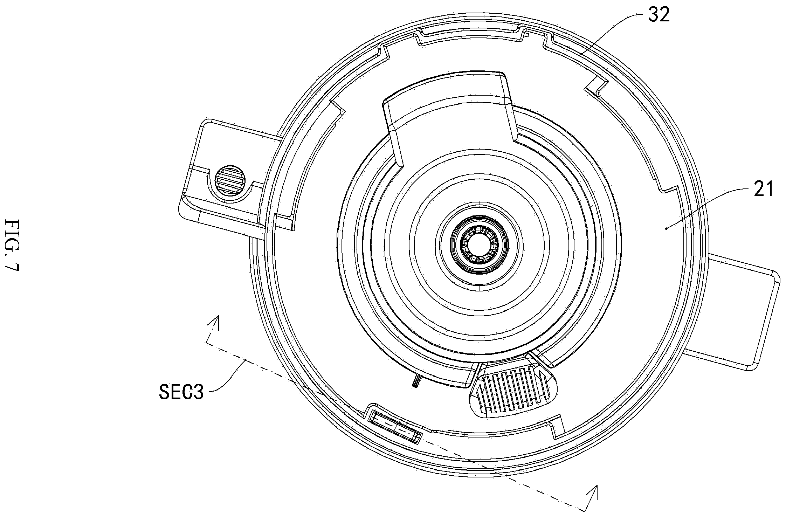

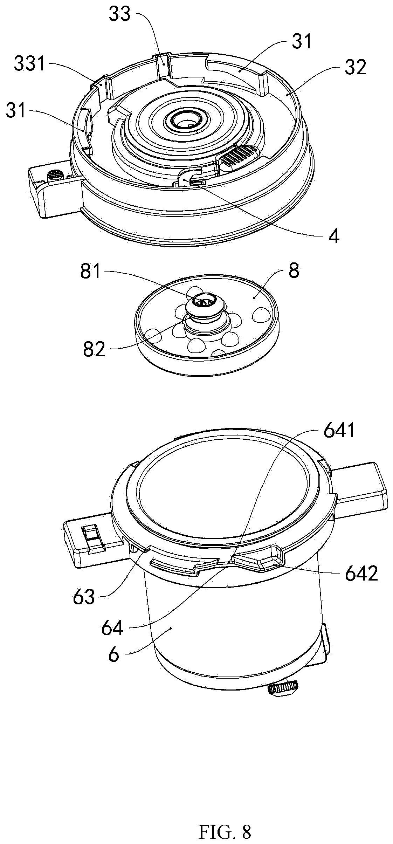

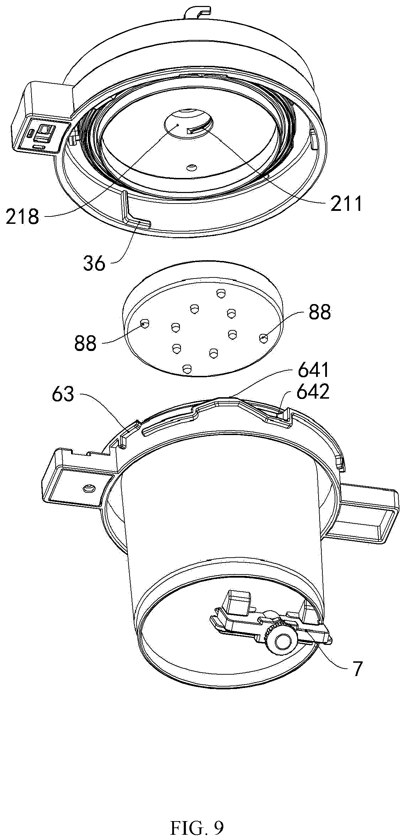

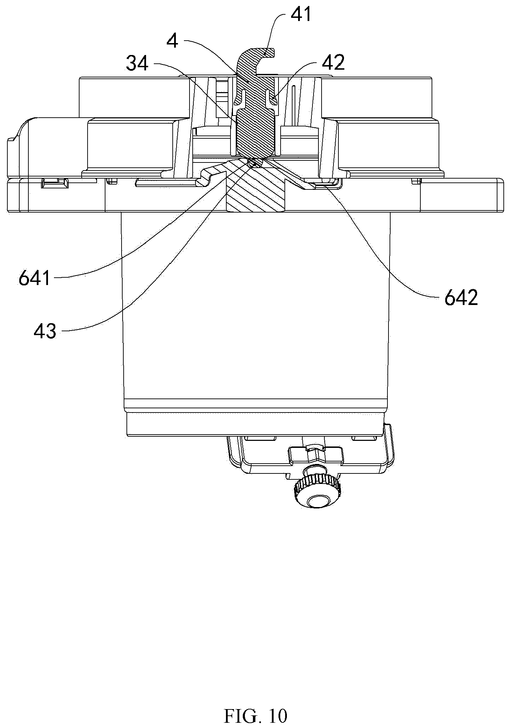

Figures 1-11 show the food processing apparatus container in the embodiments of the present utility model.

The food processing apparatus container comprises a container assembly (1), wherein the container assembly (1) comprises a cover assembly (2) and a cup body (6), wherein the cover assembly (2) comprises a plurality of holding members (22) and a cover body (21) arranged with a stirring shaft opening (218); the holding members (22) are connected with the cover body (21) and can hold the processing knife (8). The technical means for the cover assembly (2) to hold the processing knife (8) will not be repeated here if the said technical means are as described in the prior arts such as CN2022203185974.

The top of the cover body (21) is fixedly arranged with an annular extension body (32) coaxial with the stirring shaft opening (218), and the inner wall of the extension body (32) is fixedly arranged with an L-shaped host connection body (31). The ring coaxial with the stirring shaft opening (218) means that, viewed from the top, two ends of the extension body (32) are connected with each other and the inner wall of the extension body (32) is roughly coaxial with the stirring shaft opening (218) and that the internal and external parts of the extension body (32) are separated. The L-shaped host connecting body (31) means that the cross section of the host connecting body (31) intercepted along the plane parallel to the stirring shaft opening (218) is roughly L-shaped.

The bottom of the cover body (21) is fixedly arranged with a cup connecting body (36), and the cup body (6) is arranged with a connected body (63); the cup connecting body (36) and the connected body (63) butt each other to limit their mutual distance along the shaft axis of the stirring shaft opening (218) and make the cover body (21) and the cup body (6) connected detachably. For example, both the cross section of the cup connecting body (36) and the cross section of the connected body (6)3 are roughly L-shaped, and the operator rotates the cover body (21) relatively to the cup body (6) so that the L-shaped and roughly horizontal sections butt each other and thus prevent them from keeping away from each other along the shaft axis of the stirring shaft opening (218) and make the cover body (21) detachably connected with the cup body (6). The cup body (6) with any different function can be conveniently connected with the host (9) through the cover body (21).

As one of the specific embodiments, it also comprises an insurance triggering member (4) arranged with a triggering top (41), wherein the insurance triggering member (4) is arranged onto the cover body (21) and the triggering top (41) can protrude from the top of the cover body (21). It is safe to ensure that the stirring shaft (91) can rotate only when the container assembly (1) is mounted onto the host (9). One side of the triggering top (41) is rounded or made into a right angle.

As one of the specific embodiments, the cover body (21) is arranged with a linear chute (34), and the insurance triggering member (4) is inserted into the linear chute (34) so that the insurance triggering member (4) is connected with the cover body (21) in a linearly sliding manner and the triggering top (41) can go up and down relative to the cover body (21). It can ensure that the insurance triggering member (4) is connected with the cover body (21) in a linearly sliding manner.

As one of the specific embodiments, the insurance triggering member (4) is arranged with an anti-falling resilient arm (42) that extends outwards, and the anti-falling resilient arm (42) butts the inner side of the linear chute (34). For example, the anti-falling resilient arm is a plastic piece integrated with the insurance triggering member (4) so that the anti-falling resilient arm (42) become resilient. The ascending and descending of the insurance triggering member (4) possess the damping effect and thus make it difficult for the insurance triggering member (4) to fall off from the cover body (21).

As one of the specific embodiments, the cover body (21) and the cup body (6) are connected rotatablely and detachably, the cover body (21) is arranged with a safety lifting body (64), wherein the safety lifting body (64) comprises a higher section (641) and a lower section (642), and the bottom of the insurance triggering member (4) [namely the butting bottom (43)] butts the higher section (641) when the cover body (21) and the cup body (6) are closed. When the cover body (21) is separated from the cup body (6), the insurance triggering member (4) can move downwards [e.g., it moves downwards because it is abutted by the host (9) when the host (9) is removed from the container assembly (1) after the container assembly (1) is rotated] to make the triggering top (41) enter the cover body (21); it is convenient that the triggering top (41) does not interfere with the use. When the cover body (21) and the cup body (6) are closed, the bottom of the insurance triggering member (4) butts the higher section (641) make the triggering top (41) protrude from the top of the cover body (21) and thus realize the protection function.

As one of the specific embodiments, the extension body (32) is arranged with a locking groove (33) and an unlocking and yielding groove (331).

As one of the specific embodiments, the cup body (6) is arranged with an ice shaving device (68) and/or an external cup cover (69) and other functional pieces to realize different functions. For example, the bottom of the cup body (6) is arranged with an ice shaving device (68) disclosed in the document JP3234657U so that the cup body (6) can be integrated with other parts and components described in the present utility model to realize the ice-shaving function. For example, the cup body (6) is arranged with an external cup cover (69) which is detachable and can cover the mouth of the cup body (6) so that the cup body (6) can act as a sealed container.

The food processing apparatus in the embodiments of the present utility model comprises a processing knife (8) and is arranged with a stirring shaft (91) which can rotate as well as go up and down, wherein the bottom of the stirring shaft (91) is a spiral spline (911), the processing knife (8) is arranged with a holding groove (82) and a connecting part (81) just facing the stirring shaft opening (218). The working principles of the connecting part (81) and the holding groove (82) will not be repeated here if the said working principles are in the prior arts such as CN2022203185974.

The processing knife (8) is also arranged with a plurality of knife wings (89) or a knife disc (87) with top cones (88); the holding members (22) hold the processing knife (8).

The knife wings (89) are used to stir and make ice cream, and the knife disc (87) with top cones (88) is used to butt and drive the ice block to rotate as well as cooperate with the ice shaving device (68) for ice shaving. The stirring shaft (91) can rotate as well as go up and down through the prior arts, which is not repeated here.

The cover assembly (2) also comprises an operating member (24) for controlling the holding members (22). The working principles of the holding members (22) and the operating member (24) will not be repeated here if the said working principles are described in the prior arts such as CN2022203185974.

The host (9) is arranged with an L-shaped cover connecting protrusion (92), the cover body (21) rotates relative to the host (9) so that the cover body (21) approaches the host (9) and the host (9) butts the operating member (24) and further controls the holding members (22) to unlock the processing knife (8) when the host connecting body (31) and the cover connecting protrusion (92) butt each other and are connected. The spiral spline (911) is screwed into the connecting part (81) of the processing knife (8) and thus drives the processing knife (8) to rotate as well as go up and down and finally realizes food processing.

As one of the specific embodiments, the extension body (32) is arranged with a locking groove (33) and an unlocking and yielding groove (331); the host (9) is arranged with a locking protrusion (93) and an unlocking button (931) that can lock the protrusion (93) to lift, and the locking protrusion (93) is inserted into the locking groove (33) to prevent the cover body (21) from rotating relatively to the host (9). The unlocking button (931) is arranged on the front side of the host (9); when the unlocking button (931) is pressed, the unlocking button (931) butts the locking protrusion (93) via the bevel to make the locking protrusion (93) ascend and thus protrude from the locking groove (33); at the moment, the cover body (21) can rotate relative to the host (9) and is removed from the host (9). When the cover body (21) rotates to make the locking protrusion (93) just face the unlocking and yielding groove (331), the extension body (32) will not butt the locking protrusion (93) and thus it is relatively easy to remove the container assembly (1) from the host (9). In other words, the container assembly (1) can be locked and unlocked conveniently.

As one of the specific embodiments, it also comprises an insurance triggering member (4) arranged with a triggering top (41), wherein the insurance triggering member (4) is arranged onto the cover body (21), the triggering top (41) can protrude from the top of the cover body (21), the host is arranged with an arc yielding groove (94), the host is arranged with an electrical signal device (949) inside, the cover body (21) rotates relatively to the host (9) so that the host connecting body (31) and the cover connecting protrusion (92) butt each other and are connected and then the triggering top (41) triggers the electrical signal device (949) enables the host (9) to operate. It is safe that the host (9) can operate only after the container assembly (1) is mounted in place. For example, inside the host (9) is arranged with a triggered member (941) which can linearly slide on the horizontal plane, the triggered member (941) is arranged with a triggered protrusion (942) which just face the arc-shaped yielding groove (94), and the operator inserts the triggering top (41) into the arc-shaped yielding groove (94) and stretch into the host (9) when the cover assembly (2) and the host (9) approach each other; the operator rotates the cover assembly (2) so that the triggering top (41) pushes the triggered protrusion (942) to make the triggered member (941) move, the pushing part (943) of the triggered member (941) pushes the triggered sheet (948) of the electrical signal device (949) which acting as a microswitch so that the electrical signal device (949) sends an electrical signal for powering off or on to enable the host (9) to operate.

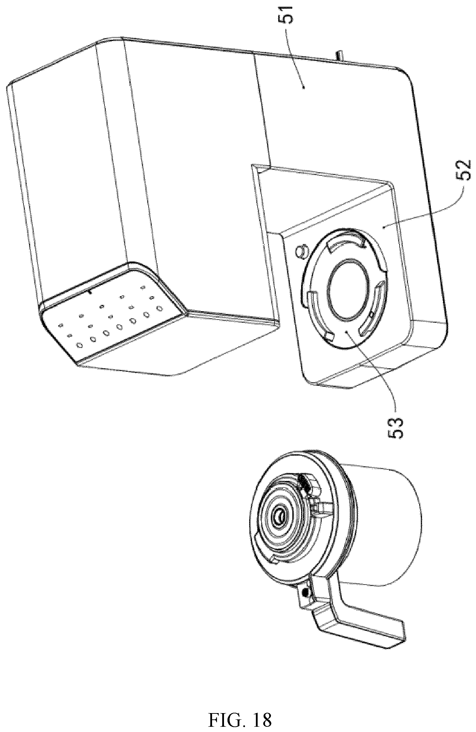

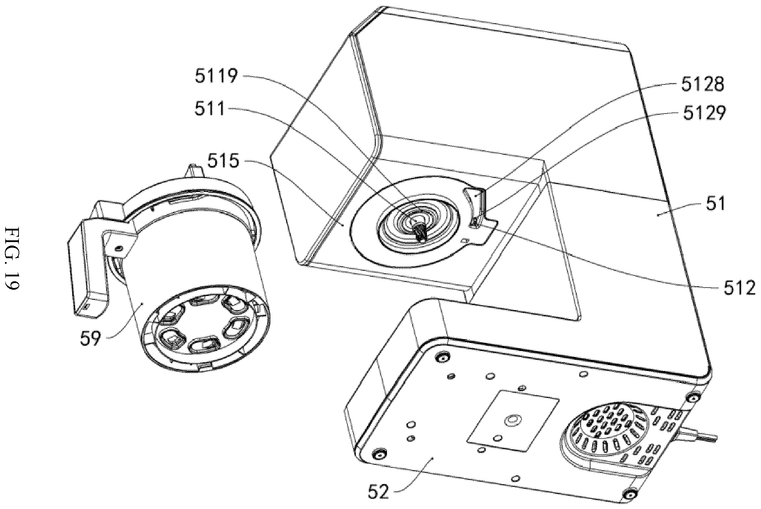

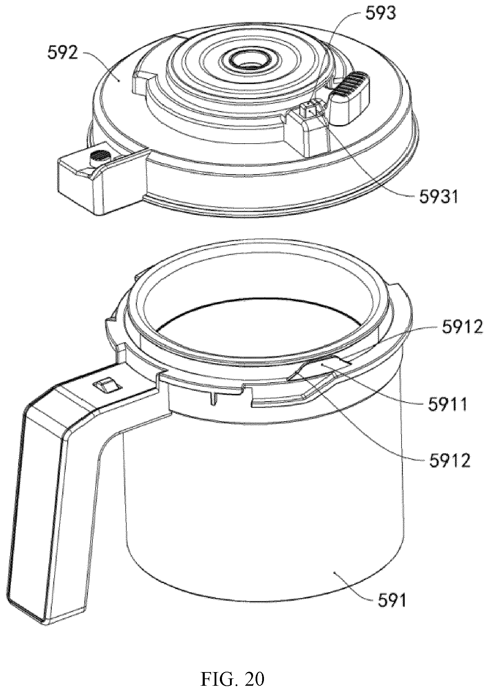

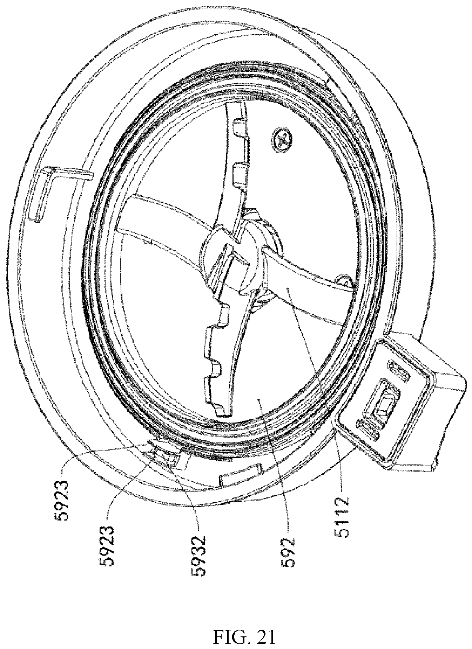

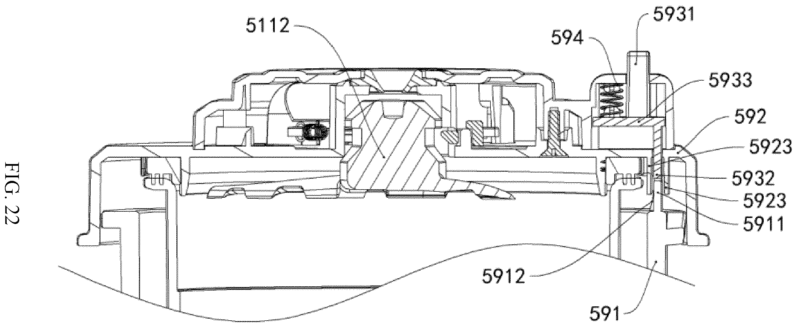

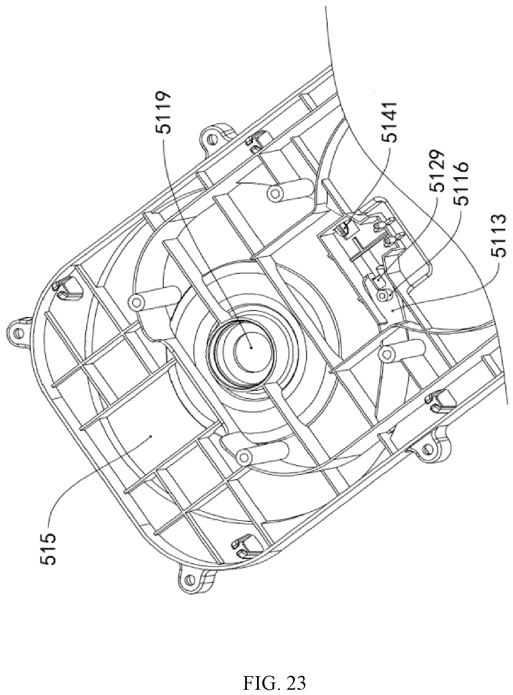

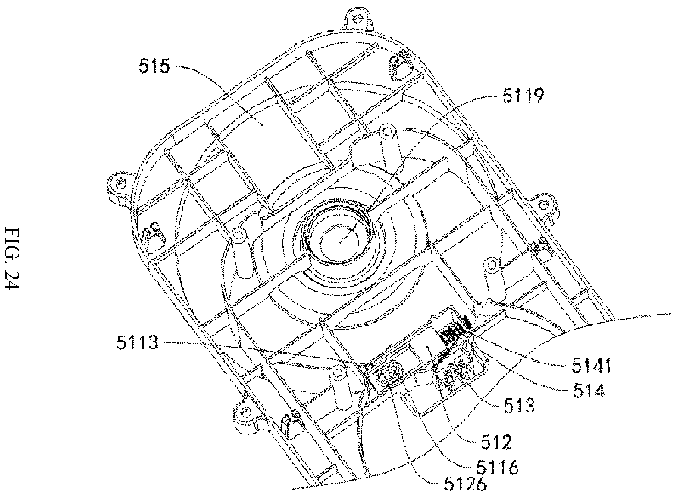

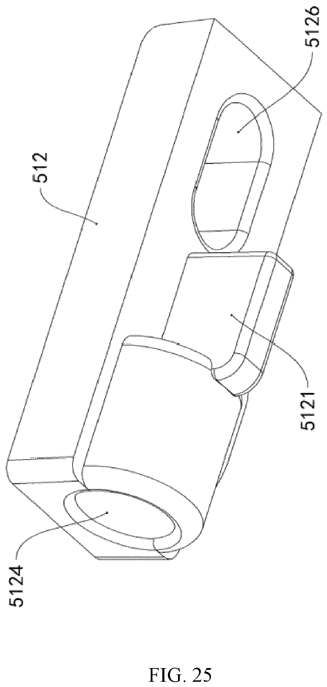

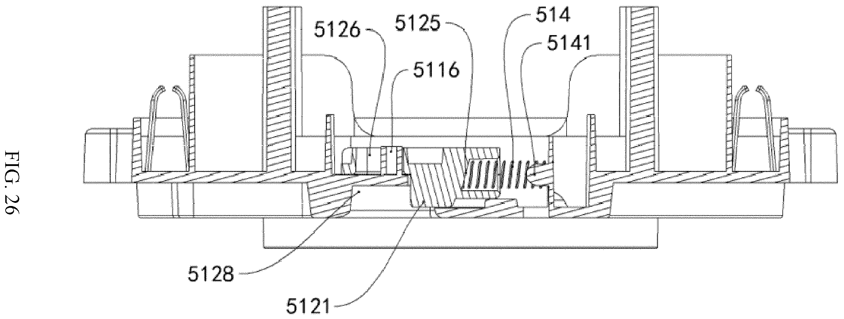

As another embodiment, as shown in Figures 18~26, a safe food processing apparatus comprises a lifting seat (53), a container (59) and a base (52) provided with a host (51).

The said host (51) is provided with an output shaft (511) with rotating power, wherein the said output shaft (511) is driven by the motor in the host (51) to rotate. The output shaft (511) is connected with a processing knife (5112); for example, the output shaft (511) is detachably connected with a processing knife (5112). The output shaft (511) drives the processing knife (5112) to rotate and process the objects such as ice cream inside the container (59).

The container (59) is detachably connected with the lifting seat (3). The realization of detachable connection of the container (59) with the lifting seat (53) can be a technical solution disclosed by CN216932854U or other technical solutions.

The lifting seat (53) can rotate, ascend and descend relative to the base (52) [in other words, when be viewed from above, the lifting seat (53) can rotate in a horizontal plane relative to the base (52)]; the axis of the said lifting seat (53) that can rotate relative to the said base (52) is collinear with the axis of rotation of the said output shaft (511). The specific way to realize the rotation, ascending and descending of the lift seat (53) relative to the base (52) can be the technical solution disclosed by CN216932854U, or other technical solutions can be used to realize the ascending and descending of the lift seat (3) while the lift seat (3) is rotating.

The safe food processing apparatus in the embodiments of the present utility model also comprises a safety switch (13) and a triggered member (12); the host (1) is provided with a host housing (15).

The triggered member (12) is connected with the host housing in a linearly sliding manner and the safety switch (13) is located on the linearly sliding path of the triggered member (12) and can control the output shaft (11). For example, the host housing (15) is provided with a sliding groove (113), the side wall of the triggered member (12) fits the side wall of the sliding groove (113) so that the triggered member (12) can be connected linearly and slidably with the host housing (15). It is easy to understand that the safety switch (13) is electrically connected with the motor of the output shaft (11); when the triggered member (12) butts the paddle of the safety switch (13), the motor circuit of the output shaft (11) is connected and the output shaft (11) can rotate at this time; when the triggered member (12) butts the paddle of the safety switch (13), the motor circuit of the output shaft (11) is disconnected and the output shaft (11) cannot rotate at this time even when the control panel is operated.

The triggered member (12) comprises a toggled end (121) exposed from the host housing.

The container assembly (9) is provided with a triggering member (93), wherein the said triggering member (93) comprises a triggering end (931) and the highest part of the triggering end (931) is the highest part of the container assembly (9). For example, the triggering member (93) is fixedly connected with the after-mentioned container (9) and the triggering end (931) extends beyond the top end surface of the container cover (92) so that the highest part of the triggering end (931) is the highest part of the container assembly (9).

The toggled end (121) is located on the rotating and ascending path of the triggering end (931). For example, the triggering end (931) rotates and ascends along the spiral line, and the toggled end (121) is located on the said spiral line; the container assembly (9) rotates and ascends as the lifting seat (3) does till the output shaft (11) is inserted into the container assembly (9) and connected with the processing knife (112) inside the container assembly (9); at the same time, the triggering end (931) butts the toggled end (121) so that the triggered member (12) slides linearly and acts on the safety switch (13); at the moment, the output shaft (11) can rotate and then drive the processing knife (112) to stir and process the food such as ice cream in the container (91).

As can be seen from the above, the safe food processing apparatus in the embodiments of the present utility model is safe because its output shaft (511) can rotate only after its lifting seat (53) drives its container assembly (59) to rotate and ascend.

As one of the specific embodiments, the container assembly (59) comprises a container (591) and a container cover (592) which is connected with the container (591) in a rotationally detachable manner, wherein the said rotationally detachable connection means that the container (591) and the container cover (592) can be detached or connected rotationally through mutual rotation such as threaded connection, or through L-shaped fasteners; the triggering member (593) comprises a locking end (5932) and is connected vertically, linearly and slidably with the container cover (592); the container (591) is provided with a locking protrusion (5911) and the highest part of the triggering end (5931) is the highest part of the container assembly (59) when the locking end (5932) butts the top of the locking protrusion (5911).

As one of the specific embodiments, the side of the locking protrusion (5911) is provided with two guide bevels (5912). It can ensure the triggering member (593) to ascend and descend smoothly.

As one of the specific embodiments, the container assembly (59) also comprises a reset member (594), wherein both ends of the said reset member (594) are connected to the container cover (592) and the triggering member (593) respectively so that the triggering end (5931) tends to descend. When the container cover (592) is separated from the container (591), the triggering end (5931) moves downward and retracts into the container cover (592) to prevent the triggering end (5931) from being broken and affecting the operations.

As one of the specific embodiments, the triggering member (593) comprises a limit part (5933), the triggering end (5931) and the locked end (5932) are fixed at the top and bottom ends of the limit part (5933) respectively; when being viewed from above, the triggering end (5931) is completely located inside the locked end (5933), in other words, when being viewed from above, the triggering end (5931) and the locked end (5932) are completely staggered and adjoin the center of the container cover (592) relative to the locked end (5932). It can prevent the diameter of the container (591) from being limited and allow a large capacity of the container (591).

As one of the specific embodiments, the container cover (592) is provided with two protective bodies (5923); the locked end (5932) faces the area formed by the two protective bodies (5923). It can prevent the locking end (5932) from being damaged when the container cover (592) is operated.

As one of the specific embodiments, it also comprises a resilient member (514) that is a spring; the host housing (515) is provided with a resilient member fixing column (5141); the triggered member (512) is provided with a resilient member opening (5124), the inner wall of the resilient member opening (5124) comprises a bevel opening end surface (5125), one end of the resilient member (514) is fixedly connected with the resilient member fixing column (5141) [for example, the resilient member fixing column (5141) is sleeved with the end] and the other end butts the opening end surface (5125) so that the triggered member (512) tends to reset and ascend. The resilient member opening (5124) of the triggered member (512) as an injection-molded part is relatively easy to pull out the core; therefore, it can not only lower the production cost of the triggered member (512) but also ensure that the triggered member (512) slides smoothly and linearly, in other words, it is not easy to get stuck.

As one of the specific embodiments, the host housing (515) is provided with a limit body (5116), the triggered member (512) is provided with a limit opening (5126) and the limit body (5116) is inserted into the limit opening (5126). It can limit the travel distance of the triggered member (512) and thus ensure reliability.

The terms such as "first" and "third" used in the present utility model do not mean any sequence, quantity or importance, merely for differentiation.

The terms such as "one" and "one kind" used in the present utility model do not mean do not mean the quantity limitation but mean the existence of at least one mentioned object.

The terms such as "top", "bottom", "side", "longitudinal", "transverse", "middle", "center", "outer", "inner", "horizontal", "vertical", "left", "right", "upper" and "lower" indicating the directions or positions used in the present utility model mean reflecting the relative positions but not the absolute positions.

The terms such as "general", "overall", "approximate", "similar" used in the present utility model are used to point out the restrictive terms that have characteristics but allow certain deviations. The extent of allowable deviations may vary from specific background; for example, for dimensional deviations, the specific backgrounds on which such allow deviations may depend include, but are not limited to, the national standards for dimensional tolerances.

## Claims

1. A food processing apparatus container comprises a cover assembly (2) and a cup body (6), wherein the cover assembly (2) comprises a plurality of holding members (22) and a cover body arranged with a stirring shaft opening (218); the holding members (22) are connected with the cover body (21) and can hold the processing knife (8); which is **characterized in that**:
the top of the cover body (21) is fixedly arranged with an annular extension body (32) coaxial with the stirring shaft opening (218), and the inner wall of the extension body (32) is fixedly arranged with an L-shaped host connection body (31); the bottom of the cover body (21) is fixedly arranged with a cup connecting body (36), and the cup body (6) is arranged with a connected body (63); the cup connecting body (36) and the connected body (63) butt each other to limit their mutual distance along the shaft axis of the stirring shaft opening (218) and make the cover body (21) and the cup body (6) connected detachably.

2. The food processing apparatus container in accordance with Claim 1, which is **characterized in that** it also comprises an insurance triggering member (4) arranged with a triggering top (41), wherein the insurance triggering member (4) is arranged onto the cover body (21) and the triggering top (41) can protrude from the top of the cover body (21);
the insurance triggering member (4) is arranged with an anti-falling resilient arm (42) that extends outwards, and the anti-falling resilient arm (42) butts the inner side of the linear chute (34).

3. The food processing apparatus container in accordance with Claim 1, which is **characterized in that** the cover body (21) is arranged with a linear chute (34), and the insurance triggering member (4) is inserted into the linear chute (34) so that the insurance triggering member (4) is connected with the cover body (21) in a linearly sliding manner and the triggering top (41) can go up and down relatively to the cover body (21);
the cover body (21) and the cup body (6) are connected rotatablely and detachably, the cover body (21) is arranged with a safety lifting body (64), wherein the safety lifting body (64) comprises a higher section (641) and a lower section (642), and the bottom of the insurance triggering member (4) butts the higher section (641) when the cover body (21) and the cup body (6) are closed.

4. The food processing apparatus container in accordance with Claim 1, which is **characterized in that** the extension body (32) is arranged with a locking groove (33) and an unlocking and yielding groove (331).

5. A food processing apparatus comprises a container in accordance with any of Claim 1, which is **characterized in that** it also comprises a processing knife (8) and is arranged with a stirring shaft (91) which can rotate and go up and down, wherein the bottom of the stirring shaft (91) is a spiral spline (911), the processing knife (8) is arranged with a holding groove (82) and a connecting part (81) just facing the stirring shaft opening (218); the processing knife (8) is also arranged with a plurality of knife wings (89) or a knife disc (87) with top cones; the holding members (22) hold the processing knife (8); the cover assembly (2) also comprises an operating member (24) for controlling the holding members (22); the host (9) is arranged with an L-shaped cover connecting protrusion (92), the cover body (21) rotates relatively to the host (9) so that the host (9) butts the operating member (24) and further controls the holding members (22) to unlock the processing knife (8) when the host connecting body (31) and the cover connecting protrusion (92) butt each other and are connected.

6. A food processing apparatus comprises a container in accordance with Claim 5, which is **characterized in that** the extension body (32) is arranged with a locking groove (33) and an unlocking and yielding groove (331); the host (9) is arranged with a locking protrusion (93) and an unlocking button (931) that enables the locking protrusion (93) to go up and down, and the locking protrusion (93) is inserted into the locking groove (33) to prevent the cover body (21) from rotating relatively to the host (9).

7. The food processing apparatus container in accordance with Claim 6, which is **characterized in that** it also comprises an insurance triggering member (4) arranged with a triggering top (41), wherein the insurance triggering member (4) is arranged onto the cover body (21), the triggering top (41) can protrude from the top of the cover body (21), the host is arranged with an arc yielding groove (94), inside the host is arranged with an electrical signal device (949), the cover body (21) rotates relatively to the host (9) so that the triggering top (41) triggers the electrical signal device (949) and enables the host (9) to operate after the host connecting body (31) and the cover connecting protrusion (92) butt each other and are connected.

8. A safe food processing apparatus comprises a lifting seat (53), a container (59) and a base (52) provided with a host (51); the said host (51) is provided with an output shaft (511) with rotating power, and the said container (59) is detachably connected with the said lifting seat (53); the said lifting seat (53) can rotate and go up and down relative to the said base (52); the axis of the said lifting seat (53) that can rotate relative to the said base (52) is collinear with the axis of rotation of the said output shaft (511);
which is **characterized in that** it also comprises a safety switch (513) and a triggered member (512); the host (51) is provided with a host housing (515); the triggered member (512) is connected linearly and slidably with the host housing (515), and the said safety switch (513) is located on the linearly sliding path of the triggered member (512) and can control the said output shaft (511); the triggered member (512) comprises a toggled end (5121) exposed from the host housing (515); the container assembly (59) is provided with a triggering member (593) that comprises a triggering end (5931), and the highest part of the triggering end (5931) is the highest part of the container assembly (59); the toggled end (5121) is located on the rotating and ascending path of the triggering end (5931).

9. The safe food processing apparatus in accordance with Claim 8, which is **characterized in that** the container assembly (9) comprises a container (591) and a container cover (592) which is connected with the container (591) in a rotationally detachable manner; the triggering member (593) comprises a locking end (5932) and is connected vertically, linearly and slidably with the container cover (592); the container (591) is provided with a locking protrusion (5911) and the highest part of the triggering end (5931) is the highest part of the container assembly (59) when the locking end (5932) butts the top of the locking protrusion (5911).

10. The safe food processing apparatus in accordance with Claim 9, which is **characterized in that** the side of the locking protrusion (5911) is provided with two guide bevels (5912).

11. The safe food processing apparatus in accordance with Claim 9, which is **characterized in that** the container assembly (59) also comprises a reset member (594), wherein both ends of the said reset member (594) are connected to the container cover (592) and the triggering member (593) respectively so that the triggering end (5931) tends to descend; the triggering member (593) comprises a limit part (5933), the triggering end (5931) and the locked end (5932) are fixed at the top and bottom ends of the limit part (5933) respectively; when being viewed from above, the triggering end is completely located inside the locked end (5933).

12. The safe food processing apparatus in accordance with Claim 11, which is **characterized in that** the container cover (592) is provided with two protective bodies (5923); the locked end faces the area formed by the two protective bodies (5923).

13. The safe food processing apparatus in accordance with Claim 8, which is **characterized in that** it also comprises a resilient member (514) that is a spring; the host housing (515) is provided with a resilient member fixing column (5141); the triggered member (512) is provided with a resilient member opening (5124), the inner wall of the resilient member opening (5124) comprises a bevel opening end surface (5125), one end of the resilient member (514) is fixedly connected with the resilient member fixing column (5141) and the other end butts the opening end surface (5125) so that the triggered member (512) tends to reset and ascend.

14. The safe food processing apparatus in accordance with Claim 13, which is **characterized in that** the host housing (515) is provided with a limit body (5116), the triggered member (512) is provided with a limit opening (5126) and the limit body (5116) is inserted into the limit opening (5126).

15. The safe food processing apparatus in accordance with Claim 8, which is **characterized in that** the host housing is provided with a sliding groove (5113), the side wall of the triggered member (512) fits the side wall of the sliding groove (5113) so that the triggered member (512) can be connected linearly and slidably with the host housing (515).
